Europäisches Patentamt

European Patent Office

Office européen des brevets

(11) Publication number: **0 297 896**
**A1**

# EUROPEAN PATENT APPLICATION

(21) Application number: **88305996.6**

(22) Date of filing: **01.07.88**

(51) Int. Cl.⁴: **F 16 L 1/02**
**F 16 L 1/04**

(30) Priority: **01.07.87 GB 8715445**

(43) Date of publication of application:
**04.01.89 Bulletin 89/01**

(84) Designated Contracting States:
**AT BE CH DE ES FR GR IT LI NL SE**

(71) Applicant: **Stanton PLC**
**Stanton-by-Dale Ilkeston Derbyshire (GB)**

(72) Inventor: **Stevens, William Walter**
**35 Drummond Road**
**Ilkeston Derbyshire (GB)**

(74) Representative: **Heath, Peter William Murray**
**FRY, HEATH & CO. Seloduct House Station Road**
**Redhill Surrey RH1 1PD (GB)**

(54) Assembly and installation of pipes.

(57) The invention provides a method of assembly and installing a length of spigot and socket pipes (9, 10) between a first and a second station comprising disposing a first pipe (9) adjacent a steel rod (7, 8) at the first station, with the spigot of the first pipe directed towards the second station; securing said first steel rod to a first clamp member (13) located to bear axially behind the socket of the first pipe; jointing a second pipe (10) to the first pipe and securing the first or a second steel rod to the first clamping member and to a second clamping member located to bear axially behind the second pipe; repeating the jointing securing and clamping operation to provide an elongate connected sequence of pipes attached to a series of steel rods between the first and second stations.

FIG. 4.

## Description

### Assembly and Installation of Pipes

This invention relates to methods of and apparatus for the assembly and installation of pipes, particularly, but not exclusively of underwater pipes. More particularly, although again not exclusively, the invention is related to the assembly and installation of sea outfall pipes from sewage systems for example.

With such arrangements it has previously been proposed to weld together and concrete coat a number of discrete lengths, say 100m, of steel pipes and locate these as parallel lines on a beach. This requires a wide flat beach, but also a considerable length to accommodate lines of pipes. Once this operation is complete the first line of pipes is towed out to sea, the second line is moved laterally and the two lines welded together. After welding and restoring the corrosion protection at the joint, the next length is towed out to sea, and so on. This previous proposal involves a number of problems. Thus a very large flat beach area is required, many months preparatory work are required, expensive supports, rollers, and hydraulic rams are required to move the pipe lengths laterally, and significant periods of interruption of towing occur whilst lengths of pipe are welded together.

In addition the concrete coating applied involves problems in this situation. Thus, concrete coatings on long continuous lengths of pipe are susceptible to cracking or spalling when uneven/undulating beds under the pipeline or long curved lengths from water supported barge to water bed result in long unsupported lengths.

It has also previously been proposed to provide a method of assembling and installing pipes comprising disposing at least one cable between a first station and a second station; attaching a first pipe to the cable at or adjacent one of said stations; moving the pipe away from said one station with the cable; jointing a second pipe to the first pipe and attaching the second pipe to the cable at or adjacent said one station; repeating the jointing and attaching operation to provide an elongate connected sequence of pipes attached to the cable; and drawing the cable away from said one station towards the second station to move the sequence of pipes into its desired position between the first and second stations. The operational sequence of attaching and jointing may be carried out with a step by step letting out of the pipes. Alternatively, the pipes may be let out continuously and the pipes attached and jointed from a trolley moving on rails, for example, at or adjacent the said one station. Yet again a plurality of pipes may be attached and jointed to the cable or cables which may then be let out carrying a fully prepared sequence of pipes.

It is an object of the present invention to enable the provision of a satisfactory and efficient arrangement for assembling and installing pipes.

According to one aspect of the invention, there is provided a method of assembling and installing a length of spigot and socket pipes between a first and a second station comprising extending towing means from the second station towards the first station; connecting the towing means directly or indirectly to at least one first steel rod; disposing a first pipe adjacent the steel rod at the first station, with the spigot of the first pipe linked to the towing means or the steel rod and directed towards the second station; securing said first steel rod to a first clamp member located to bear axially behind the socket of the first pipe; jointing a second pipe to the first pipe and securing the first or a second steel rod to the first clamping member and to a second clamping member located to bear axially behind the second pipe; repeating the jointing securing and clamping operation to provide an elongate connected sequence of pipes attached to a series of steel rods; and drawing the towing means away from said first station towards the second station to move the sequence of pipes into its desired position between the first and second stations.

According to another aspect of the invention, there is provided a method of assembling and installing a length of spigot and socket pipes between a first and a second station comprising disposing a first pipe adjacent a steel rod at the first station, with the spigot of the first pipe directed towards the second station; securing said first steel rod to a first clamp member located to bear axially behind the socket of the first pipe; jointing a second pipe to the first pipe and securing the first or a second steel rod to the first clamping member and to a second clamping member located to bear axially behind the second pipe; repeating the jointing securing and clamping operation to provide an elongate connected sequence of pipes attached to a series of steel rods between the first and second stations.

The steel rods may comprise high tensile steel bars such as of the kind used as tie-bars connecting certain forms of flanged pipes.

The method of the invention is particularly well adapted to the assembling of underwater pipes which by its operation are drawn into their desired position on the water bed.

The towing means may comprise a cable or chain for example.

The invention includes within its scope a pipeline incorporating the rods and clamps herein described, and apparatus for performing the method as hereinbefore defined.

The pipes may be of cast iron, such as ductile cast iron, or of any other convenient material such as steel or polyethylene.

The pipes may be non-locked or may be provided with their own internal or external locking means.

In one embodiment of the invention, the pipes may comprise spigot and socket pipes of the kind made and sold under the registered trade mark "Stantyte".

The pipe construction may be such as to permit deflection at the joint, so as to enable adequate bending of the pipeline as it forms to accommodate limited curvature of the water bed upon which it is laid.

The pipes may be provided with weighting to counteract any natural buoyancy whilst the pipes are air filled, for example, and to hold them, once laid, firmly located on the water bed. In one embodiment of the invention the weighting may comprise a concrete sleeve adapted to fit over each pipe in the pipeline.

In one embodiment of the invention, two sets of steel rods are provided one set on each side of the pipeline. The clamps in this case may include harnesses arranged to locate on each pipe and be secured via clamp components to the rod on each side. The harnesses may be annular members arranged to surround the pipes.

The clamp is of such a dimension, that as the pipes are drawn towards the second station, each pipe is subjected to a lengthwise force on its socket. This provides full and adequate support for each pipe and maintains the integrity of each joint as the pipeline is moved with the cable.

The pipeline may be arranged to be drawn into a prepared trench in the sea bed.

The steel rods and the clamps may be treated as sacrificial and may be left in position after installation of the pipe under water. Alternatively, however, the rods and clamps may be designed to be recoverable by an underwater diver.

In one embodiment of the invention, the pipes are jointed, secured and clamped at or adjacent a shore mounted station, and the rod let out as required from the shore as a vessel holding the towing means moves out from the shore, or as a winch carrying the towing means on an anchored vessel is wound in.

The operational sequence of jointing, securing and clamping may be carried out with a step by step letting out of the pipes. Alternatively, the pipes may be let out continuously and the pipes jointed, secured and clamped from a trolley moving on rails, for example, at or adjacent the said one station. Yet again a plurality of pipes may be jointed, secured and clamped to a series of rods which may then be let out carrying a fully prepared sequence of pipes. In another arrangement an initial sequence of pipes may be jointed, secured and clamped on shore and extended on the water by pipes being jointed, secured and clamped on or adjacent a water supported barge, and fed into the water as the barge moves from the shore, whilst the shore station may comprise a fixed support for the rods. This latter arrangement is of advantage where limited space is available at the shore station.

In order that the invention may be more readily understood, one embodiment thereof will now be desribed by way of example with reference to the accompanying drawings in which :-

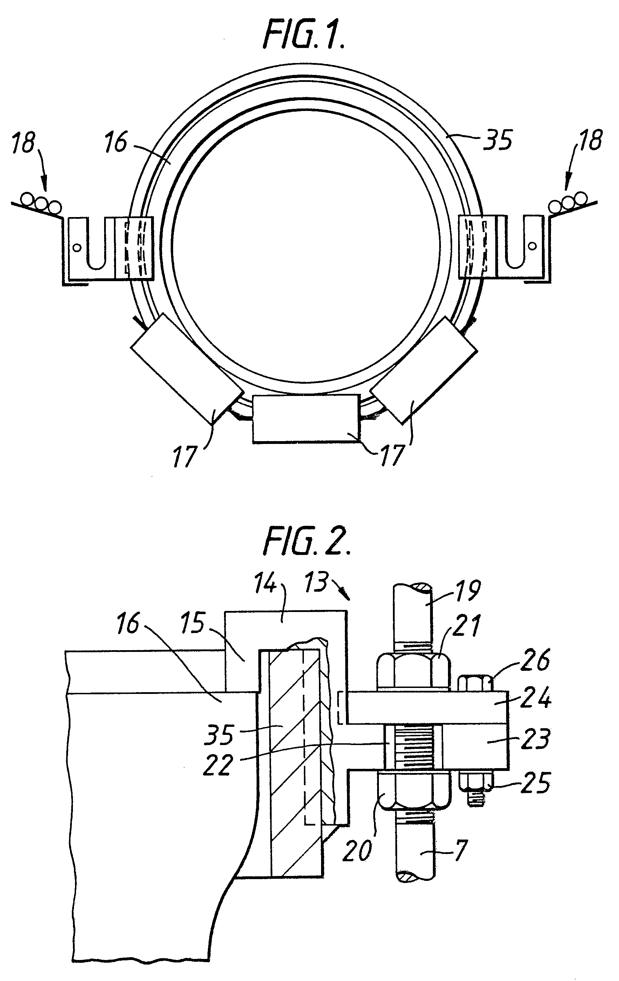

Figure 1 is a sectional end elevation showing the assembly of a pipeline incorporating the method of the invention;

Figure 2 is an enlarged sectional plan view showing a portion of the pipeline assembled as per Figure 1;

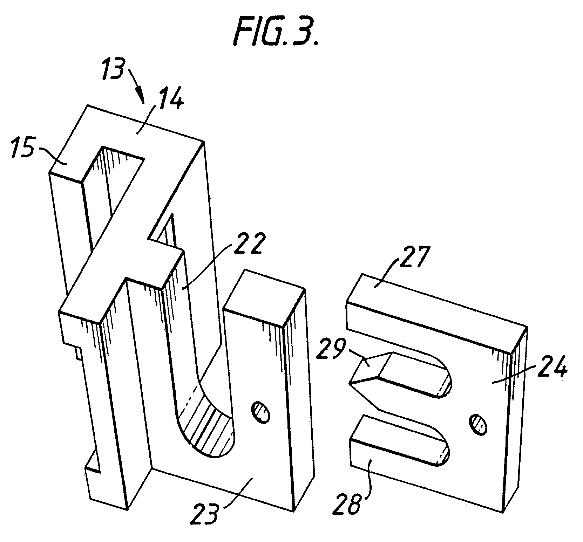

Figure 3 shows a dismantled clamp member used in the arrangement of Figure 2;

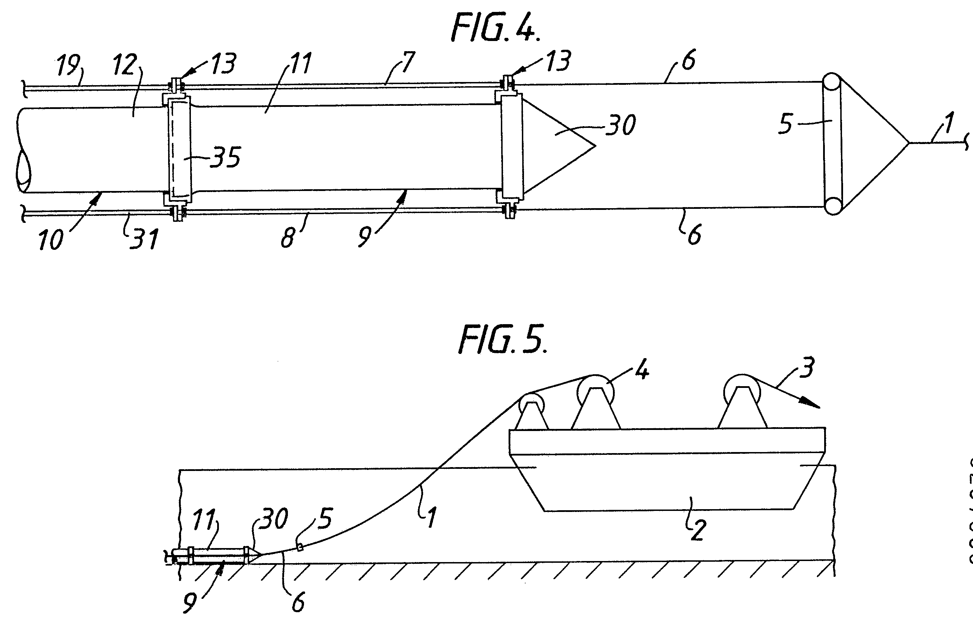

Figure 4 is a plan view of a sequence of pipes joined together by the arrangement of Figure I; and

Figure 5 is an elevation of part of the sequence of pipes of Figure 1 showing the second station for use in the method of laying the pipes under water.

Referring now to the drawings, there is illustrated a pipeline consisting of a sewage outfall in the course of assembly and installation from a beach.

As can be seen a towing cable 1 is connected to a sea barge 2 (constituting a second station), anchored via a line 3 and carrying a wind-in winch 4.

The towing cable has at its free end, a bridle having a cross-bar 5 for connection via cables 6 to high tensile bars 7,8. From the bridle and cables 6 two sets of high tensile bars are laid out one on each side of a sequence of pipes 9,10 undergoing connection and securing on a beach. Carried between the sets of bars are the sequence of pipes 9,10, in this case "Stantyte" (Registered Trade Mark) spigot and socket, non-lockable pipes formed of ductile iron and provided with internal water-tight seals. Each pipe is provided with a concrete sleeve 11,12. This may be such as to ensure an adequate weighting to provide sufficient negative buoyancy for the pipeline, when it is completed but still air filled, to remain , in position in the prepared trench in the sea bed during installation but sufficiently buoyant for towing forces to be kept to a minimum. Alternatively the coating may be such as to allow the pipeline, when air filled, to be towed into position whilst floating.

Around the spigot end of each pipe is located a clamp 13 comprising a metal annular portion or hoop 35 together with two clamp connectors 14 welded to the annular portion one on each side.

It will be observed that the clamp 13 is free to move around the outer wall of the pipe socket it surrounds, with a bearing flange 15 of each clamp connector 14 located against the end of the socket 16. It is to be noted the pipes are disposed with their socket ends located directed towards the beach, so that as the sea barge 2 applies tension to the towing cable 1, the pipes are moved by their clamps 13 from their socket end so that the spigot of each pipe is held firmly in location in the next adjacent socket.

In operation successive pipes are disposed on a roller conveyor 17 on the beach and moved to a first station carrying on each side of the pipes a sequence 18 of prepared high tensile steel bars. A clamp 13 with a pair of clamp connectors 14 is located about each pipe socket, and steel bars 7,19 from the upstream and downstream directions are connected by means of nuts 20,21 within a 'U' shaped opening 22 in a sideways directed flange 23 in each clamp connectors. A separator 24 is then secured to each such flange by nut 25 and bolt 26, the separator being provided with fingers 27,28,29 such as to define with the 'U' shaped slot in the flanges separate openings for the downstream and upstream tie-bars 7,19 After assembly of the components, the tie-bars are tightened onto the clamp connectors 14 welded to the metal hoop 35. To eliminate any tilt of the harness of the steel bar and clamp support on either side, alternate bars are placed in the upper and then the lower openings in the assembled clamp connectors and separators.

It is to be noted that an end cap 30 is placed over the first pipe 9 in the sequence to enable air to be retained in the pipeline and prevent the ingress of detritus from the sea bed during the laying operation. Once the first pipe 9 has been located and clamped, the next pipe 10 is placed in position, provided with a clamp 13 around its spigot end, and connected to the first pipe 9, the clamp then being secured to the bars 7,8,19 & 31.

This operational sequence is completed step by step, until a predetermined number of pipes have been connected, with the barge winch 4 being wound in to move the pipes out to sea, between each sequence, until the required length of sewer outfall pipe has been drawn across the sea bed.

Once the desired length (which may be several thousand meters) of sewer outfall pipe has been drawn out to sea, the end cap 30 from the first pipe is removed and the whole pipe array is allowed to fill with water and rest firmly within its prepared trench. The last pipe at the beach end is finally connected to the outlet sewer in normal manner, diffuser outlets secured to the first pipe or first few pipes (unless the first pipe or first few pipes already included diffuser outlets) and the outfall pipe is then in a state of completion.

The embodiment of the invention illustrated and particularly described provides an inexpensive and quick form of assembling and installing a sea outfall for sewerage in which significant time savings are obtained as well as saving on support service and logistics.

The short discrete lengths of iron pipes together with the flexible joints used enables the pipeline to follow closely the contours of the water bed or take up the curvature from barge to water bed without subjecting concrete coatings to the type of stresses causing cracking and spalling.

Whilst the invention has been particularly described in relation to the installation of a sewerage outfall, it has application in relation to other forms of pipes, especially underwater pipes. Thus, for example, by locating the first and second stations on opposite banks of a river, the invention may be used to assemble and instal a pipeline across the river for carrying, e.g. sewerage or mains water.

**Claims**

1. A method of assembling and installing a length of spigot and socket pipes between a first and a second station comprising disposing a first pipe adjacent a steel rod at the first station, with the spigot of the first pipe directed towards the second station; securing said first steel rod to a first clamp member located to bear axially behind the socket of the first pipe; jointing a second pipe to the first pipe and securing the first or a second steel rod to the first clamping member and to a second clamping member located to bear axially behind the second pipe; repeating the jointing securing and clamping operation to provide an elongate connected sequence of pipes attached to a series of steel rods between the first and second stations.

2. A method of assembling and installing a length of spigot and socket pipes between a first and a second station comprising extending towing means from the second station towards the first station; connecting the towing means directly or indirectly to at least one first steel rod; disposing a first pipe adjacent the steel rod at the first station, with the spigot of the first pipe linked to the towing means or the steel rod and directed towards the second station; securing said first steel rod to a first clamp member located to bear axially behind the socket of the first pipe; jointing a second pipe to the first pipe and securing the first or a second steel rod to the first clamping member and to a second clamping member located to bear axially behind the second pipe; repeating the jointing securing and clamping operation to provide an elongate connected sequence of pipes attached to a series of steel rods; and drawing the towing means away from said first station towards the second station to move the sequence of pipes into its desired position between the first and second stations.

3. A method as claimed in Claim 1 or 2 wherein the steel rods are high tensile steel bars.

4. A method as claimed in any one of the preceding claims wherein two sets of rods are provided one on each side of the pipeline.

5. A method as claimed in Claim 4 wherein the clamps comprise harnesses arranged to locate on each pipe and be secured via clamp components to the rod on each side.

6. A method as claimed in any one of the preceding claims wherein the pipes are of cast iron.

7. A method as claimed in any one of the preceding claims used for the assembly and installation of underwater pipes.

8. A method as claimed in Claim 7 wherein the pipes are jointed, secured and clamped to the rods at or adjacent a shore mounted station, the rods being let out as required from the shore station.

9. Apparatus for assembling and installing a length of spigot and socket pipes by means of the method claimed in any one of the preceding claims.

10. A pipeline formed by the method claimed in any one of Claims 1 to 9.

0297896

**FIG.1.**

**FIG.2.**

0297896

FIG.3.

## FIG.4.

## FIG.5.

0297896

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 196 779 (STANTON AND STAVELEY)<br>* claims; figures 1,3 *<br>--- | 1,2,5-10 | F 16 L 1/02<br>F 16 L 1/04 |
| A | EP-A-0 221 860 (O.M.A. DI BARATELLA PAOLA)<br>* abstract; figure 1 *<br>--- | 1,3,4,10 | |
| A | FR-A-1 222 669 (S.E.G.A. N.S.)<br>* figure 3 *<br>----- | 1 | |

|  |  |
|---|---|
|  | TECHNICAL FIELDS SEARCHED (Int. Cl.4)<br><br>F 16 L 1/00 |

The present search report has been drawn up for all claims

| Place of search | Date of completion of the search | Examiner |
|---|---|---|
| BERLIN | 14-09-1988 | SCHAEFFLER C.A.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

           

& : member of the same patent family, corresponding document

EPO FORM 1503 03.82 (P0401)